Europäisches Patentamt

(19) European Patent Office (11) Numéro de publication: **0 235 475**
Office européen des brevets **B1**

(12) **FASCICULE DE BREVET EUROPEEN**

(45) Date de publication du fascicule du brevet: (51) Int. Cl.⁴: **G01C 19/02**
02.05.90

(21) Numéro de dépôt: **86402782.6**

(22) Date de dépôt: **12.12.86**

(54) **Gyroscope à entraînement par ressort.**

(30) Priorité: **20.12.85 FR 8518958**

(43) Date de publication de la demande:
**09.09.87 Bulletin 87/37**

(45) Mention de la délivrance du brevet:
**02.05.90 Bulletin 90/18**

(84) Etats contractants désignés:
**CH DE ES GB IT LI NL SE**

(56) Documents cités:
**FR-A- 2 127 277**
**GB-A- 1 092 344**
**US-A- 2 732 721**
**US-A- 4 305 304**

(73) Titulaire: **AEROSPATIALE Société Nationale
Industrielle, 37, Boulevard de Montmorency,
F-75781 Paris Cédex 16(FR)**

(72) Inventeur: **Moutardier, Jacques, 17 rue de la Fosse
Bazin, F-92350 Le Plessis Robinson(FR)**

(74) Mandataire: **Bonnetat, Christian et al, CABINET
BONNETAT 23, Rue de Léningrad, F-75008 Paris(FR)**

## Description

La présente invention concerne un gyroscope dont la rotation du rotor est provoquée par la détente d'un ressort.

Le brevet US-A-4 305 304 décrit déjà un gyroscope du type comprenant :
- un rotor creux susceptible de tourner autour d'un arbre fixe le traversant,
- un ressort à lame logé à l'intérieur du rotor et entourant en spirale ledit arbre fixe,
- des premiers et seconds moyens de liaison pour solidariser, respectivement, une première extrémité du ressort avec l'arbre fixe, et la seconde extrémité du ressort avec le rotor, de sorte qu'il soit possible d'emmagasiner de l'énergie dans le ressort en le bandant,
- des moyens de blocage du rotor par rapport à l'arbre fixe dans une position pour laquelle le ressort est bandé,
- des moyens de commande des moyens de blocage pour débloquer le rotor de façon que celui-ci soit entraîné en rotation par la détente du ressort,
- lesdits premiers moyens de liaison étant tels que la liaison qu'ils établissent est rompue à la fin de la détente du ressort.

L'inconvénient essentiel du gyroscope décrit dans le brevet US-A-4 305 304 réside en ce que la configuration particulière des moyens de liaison entre ladite première extrémité du ressort et l'arbre fixe ne permet pas un accrochage parfaitement fiable du ressort sur l'arbre fixe. En effet, dans ce cas, ladite première extrémité du ressort, recourbée sur elle-même, s'engage dans une fente longitudinale de l'arbre fixe. Or, une telle conception de l'accrochage ne permet pas d'encaisser de fortes contraintes mécaniques sans risque de rupture de la liaison entre l'extrémité du ressort et l'arbre fixe par ouverture de ladite extrémité. Le ressort peut ainsi se décrocher prématurément, soit lors du bandage du ressort, soit, pendant la détente de celui-ci, avant d'avoir fourni le maximum d'énergie.

Par ailleurs, le brevet FR-A 2 127 277 décrit un gyroscope à ressort dans lequel l'extrémité du ruban d'acier comporte un trou dans lequel s'encliquete un téton solidaire de la toupie. Dans ce gyroscope, la désolidarisation entre ladite extrémité et ledit téton est obtenue du fait que l'autre extrémité du ruban d'acier est ancrée à poste fixe, alors que la toupie est liée à un projectile lancé.

La présente invention a pour but d'éviter l'inconvénient mentionné à propos du gyroscope du brevet US-A 4 305 304. Elle concerne un gyroscope comportant des moyens de liaison entre l'extrémité du ressort et l'arbre fixe conçus de façon telle que, dans tous les cas, la rupture de la liaison qu'ils établissent n'a effectivement lieu qu'à la fin de la détente du ressort quand celui-ci a fourni le maximum d'énergie, lesdits moyens de liaison permettant un accrochage encore plus fiable entre le ressort et l'arbre fixe, lors du bandage du ressort ou au cours de sa détente.

A cet effet, le gyroscope, du type décrit ci-dessus, est caractérisé, selon la présente invention, en ce que lesdits premiers moyens de liaison comportent un doigt, porté par l'arbre fixe, qui s'étend transversalement par rapport à l'axe longitudinal de l'arbre fixe et qui est susceptible d'être engagé dans une ouverture pratiquée dans ladite première extrémité du ressort, en ce que ledit doigt est muni d'une gorge pour l'accrochage du bord avant de l'ouverture pratiquée dans la première extrémité du ressort, et en ce que les dimensions transversale et longitudinale de l'ouverture sont telles qu'elles permettent un mouvement relatif entre le doigt et l'ouverture, et le dégagement du doigt de l'ouverture à la fin de la détente du ressort. Ladite ouverture présente notamment une forme générale oblongue dans la direction longitudinale du ressort.

Cette conception particulière desdits moyens de liaison garantit, contrairement à celle décrite dans le brevet US-A 4 305 304 antérieur, un accrochage entre le ressort et l'arbre fixe pouvant supporter de fortes contraintes mécaniques, aussi bien lors du bandage du ressort que pendant sa détente, ladite liaison ne pouvant se rompre qu'une fois que le maximum d'énergie a été fourni au rotor.

Selon encore une autre caractéristique de l'invention, ladite première extrémité du ressort comporte une languette fixée sur la partie du bord de l'ouverture opposée à celle destinée à être accrochée dans ladite gorge, languette qui, en position bandée du ressort, est inclinée vers l'extérieur par rapport à l'arbre fixe, son extrémité libre se trouvant au contact ou au voisinage de la tête dudit doigt.

En particulier, la tête dudit doigt présente une rampe sur laquelle ladite languette peut glisser à la fin de la détente du ressort.

Ainsi, à la fin de la détente du ressort, la tendance naturelle de l'extrémité du ressort à s'écarter de l'arbre fixe, mouvement d'écartement qui suit immédiatement un léger déplacement en avant de ladite extrémité de sorte que le bord avant de son ouverture s'échappe de la gorge du doigt, est favorisée par le glissement de la languette sur la tête du doigt, ce qui permet, en même temps, d'éviter le risque que le bord opposé de l'ouverture, du fait d'un déplacement en avant trop important de l'extrémité du ressort, ne vienne se bloquer contre le doigt en empêchant ainsi la rupture de la liaison entre le ressort et l'arbre fixe.

Dans un mode particulier de réalisation de l'invention, le doigt est de forme générale cylindrique, sa gorge étant annulaire, tandis que sa tête peut être de forme générale tronconique, la surface latérale de celle-ci servant de rampe de glissement pour ladite languette.

En outre, le doigt peut être logé, en partie, dans un évidement transversal de l'arbre fixe.

Selon une autre caractéristique de l'invention, le rayon de courbure de ladite première extrémité du ressort, dans l'état non bandé du ressort, est supérieur au rayon de courbure de celle-ci une fois que le ressort a été accroché audit doigt et bandé.

Cette particularité renforce la tendance naturelle, indiquée ci-dessus, de l'extrémité du ressort à s'écarter de l'arbre fixe à la fin de la détente du ressort en facilitant ainsi la rupture de la liaison entre le ressort et l'arbre fixe.

Enfin, en ce qui concerne la seconde extrémité du ressort, celle-ci peut être recourbée sur elle-même de façon à s'accrocher à un ergot prévu sur la paroi latérale interne du rotor.

Les figures du dessin annexé feront bien comprendre comment l'invention peut être réalisée. Sur ces figures, des références identiques désignent des éléments identiques ou semblables.

La figure 1 est une vue schématique en coupe axiale du gyroscope de l'invention.

La figure 2 est une vue en coupe selon la ligne II-II de la figure 1.

La figure 3 est une vue schématique, en coupe partielle, de l'arbre fixe du gyroscope de l'invention.

La figure 4 est une vue en coupe selon la ligne IV-IV de la figure 3.

La figure 5 est une vue en coupe partielle du ressort avant mise en place dans le gyroscope.

La figure 6 est une vue de dessus de la première extrémité du ressort dans l'état non recourbé.

Les figures 7a et 7b sont des vues schématiques en coupe transversale de l'arbre fixe et de l'extrémité correspondante du ressort, dans l'état bandé du ressort et au cours de la libération du ressort, respectivement.

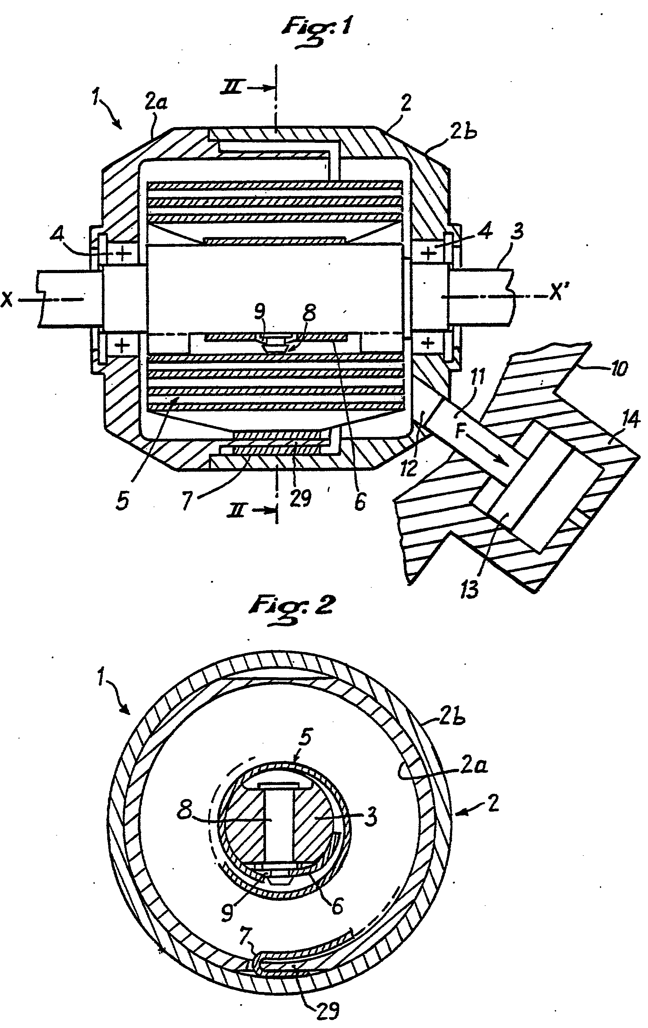

En se référant plus particulièrement aux figures 1 et 2, le gyroscope 1 de l'invention comporte un rotor 2 creux susceptible de tourner autour d'un arbre fixe 3 le traversant sur des paliers 4 constitués, par exemple, de roulements à billes.

Un ressort à lame 5 est logé à l'intérieur du rotor 2 et entoure en spirale l'arbre fixe 3. Une première extrémité 6 du ressort 5 est reliée à l'arbre fixe 3 et la seconde extrémité 7 du ressort 5 est reliée au rotor 2 de sorte qu'il soit possible d'emmagasiner de l'énergie dans le ressort 5 en le bandant.

Conformément à l'invention, l'arbre fixe 3 porte un doigt 8, qui s'étend au moins sensiblement transversalement par rapport à l'axe longitudinal X-X' de l'arbre fixe 3, et qui est susceptible d'être engagé dans une ouverture 9 pratiquée dans la première extrémité 6 du ressort 5, la liaison entre la première extrémité 6 du ressort 5 et l'arbre fixe 3 étant destinée à être rompue à la fin de la détente du ressort 5.

Dans l'exemple représenté, le rotor 2 est constitué de deux parties 2a, 2b assemblées, par exemple, par vissage. L'ensemble du rotor et de l'arbre fixe est logé dans un carter, dont seule une partie 10 a été représentée sur la figure 1 pour des raisons de clarté du dessin.

Dans cette partie 10 du carter, on prévoit des moyens de blocage du rotor 2, ainsi que des moyens de commande desdits moyens de blocage pour débloquer le rotor de façon que celui-ci puisse être entraîné en rotation par la détente du ressort. Ces moyens de blocage et de commande sont constitués, dans l'exemple décrit, par une tige de piston 11 susceptible de coulisser dans un alésage 12 du rotor 2. Le piston 13 associé à la tige 11 peut se déplacer dans le cylindre 14 sous l'action, par exemple, d'une faible charge pyrotechnique ou de tout autre moyen approprié (non représenté), de façon que la tige 11 puisse se rétracter en libérant le rotor 2 qui est ainsi entraîné par le ressort 5 qui se détend d'un coup.

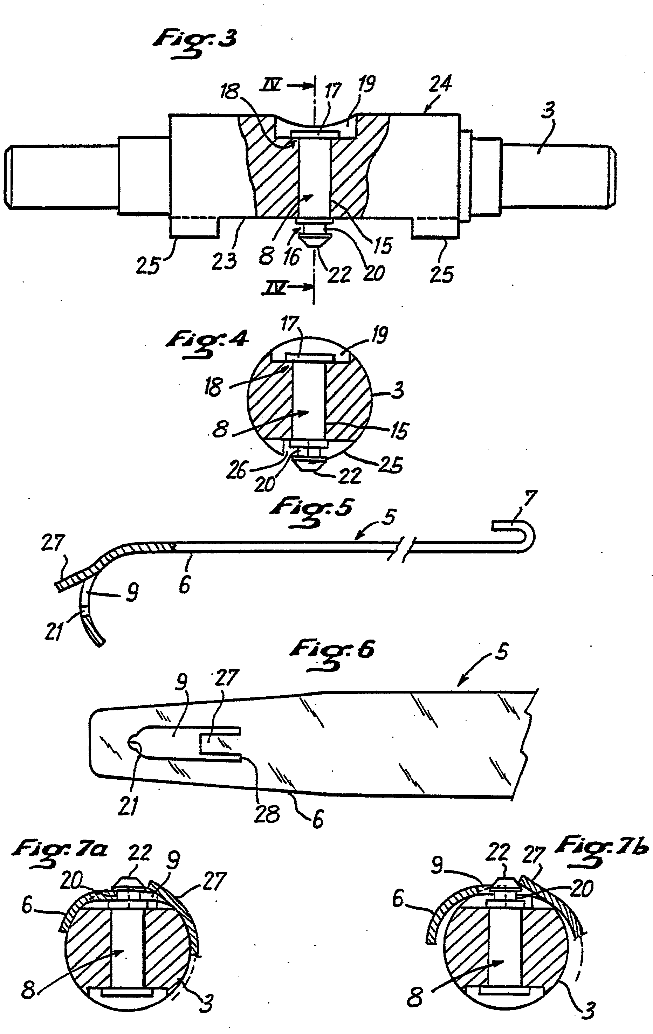

En se référant maintenant plus particulièrement aux figures 3 et 4, le doigt 8, logé en partie dans un évidement transversal 15 de l'arbre fixe 3, présente une extrémité 16 qui fait saillie de l'arbre fix 3 et qui est destinée à s'accrocher dans l'ouverture 9 de l'extrémité correspondante 6 du ressort 5. Le doigt 8 peut être fixé dans l'évidement transversal 15 par tout moyen approprié, tel qu'un sertissage 17, prévu, à son autre extrémité 18, dans un creux 19 ménagé dans l'arbre fixe 3 dans le prolongement de l'évidement transversal 15.

L'extrémité 16 du doigt 8, en saillie par rapport à l'arbre fixe 3, est munie d'une gorge 20 pour l'accrochage du bord avant 21 (figures 5 et 6) de l'ouverture 9 dans l'extrémité 6 du ressort 5, l'extrémité 6 étant elle-même considérée comme l'extrémité avant du ressort 5.

Dans l'exemple représenté, le doigt 8 est de forme générale cylindrique, et la gorge 20 est annulaire, tandis que la tête 22 du doigt 8 est de forme générale tronconique. Comme cela ressort clairement des figures 3 et 4, l'extrémité 16 du doigt 8 fait saillie par rapport à un méplat 23 s'étendant longitudinalement dans la partie centrale 24 de plus grand diamètre de l'arbre 3. On notera que le méplat 23 ne s'étend pas jusqu'aux extrémités 25 de ladite partie centrale 24 où sont prévues des rainures 26 longitudinales alignées servant de repères permettant de contrôler, par exemple visuellement, le positionnement de l'extrémité 6 du ressort 5 par rapport au doigt 8.

En se référant maintenant plus particulièrement aux figures 5 et 6, les dimensions transversale et longitudinale de l'ouverture 9 pratiquée dans l'extrémité 6 du ressort 5 sont telles qu'elles permettent un mouvement relatif entre le doigt 8 et l'ouverture 9, et le dégagement du doigt de l'ouverture à la fin de la détente du ressort. Comme on peut le voir plus clairement sur la figure 6 où l'extrémité 6 du ressort 5 est représentée dans l'état non recourbé, l'ouverture 9 présente une forme générale oblongue dans la direction longitudinale du ressort 5.

De façon à faciliter la rupture de la liaison entre l'extrémité 6 du ressort 5 et l'arbre fixe 3 à la fin de la détente du ressort, ladite extrémité 6 du ressort 5 comporte une laguette 27 fixée sur la partie 28 du bord de l'ouverture 9 opposée à la partie 21 destinée à être accrochée dans la gorge 20. La languette 27, en position bandée du ressort 5, est inclinée vers l'extérieur par rapport à l'arbre fixe 3 et son extrémité libre se trouve au contact ou au voisinage de la tête 22 du doigt 8, en pouvant glisser sur celle-ci pendant la détente du ressort 5 de façon à permettre la libération du ressort à la fin de cette détente.

On notera que le rayon de courbure de l'extrémité 6 du ressort 5, dans l'état non bandé du ressort, est supérieur au rayon de courbure de celle-ci une fois que le ressort 5 a été accroché au doigt 8 et bandé. Comme indiqué précédemment, cela facilite l'éjection de l'extrémité 6 du ressort du doigt 8 à la fin de la détente dudit ressort.

Enfin, la seconde extrémité 7 du ressort 5 est recourbée sur elle-même de façon à s'accrocher à un ergot 29 prévu sous la paroi latérale interne du rotor 2.

Le gyroscope de l'invention fonctionne de la façon suivante.

Une fois l'extrémité 6 du ressort 5 accrochée au doigt 8, le ressort 5 est bandé de façon à emmagasiner de l'énergie dans celui-ci, puis le rotor 2 est bloqué, grâce à la tige de piston 11 qui est introduite dans l'alésage 12 du rotor 2, dans la position pour laquelle le ressort 5 est bandé.

Dans cette position, le bord avant 21 de l'ouverture 9 dans l'extrémité 6 du ressort 5 est accroché dans la gorge 20 du doigt 8, tandis que l'extrémité libre de la languette 27 est au contact de la tête 22 du doigt 8 (figure 7a), ou tout au moins au voisinage de celle-ci.

Au moment souhaité, le rotor 2 est libéré, par exemple par mise à feu d'une faible charge pyrotechnique dont l'action permet la rétraction de la tige de piston 11 dans le sens de la flèche F (figure 1), et est entraîné en rotation par la détente brusque du ressort 5.

A la fin de la détente du ressort, la liaison entre l'extrémité 6 de celui-ci et le doigt 8 se rompt. En effet, à ce moment, la tendance naturelle de l'extrémité 6 du ressort 5 à s'écarter de l'arbre fixe 3, mouvement d'écartement qui suit immédiatement un léger déplacement en avant de ladite extrémité de sorte que le bord avant 21 de son ouverture 9 s'échappe de la gorge 20 du doigt 8, est favorisée par le glissement de la languette 27 sur la tête 22, formant rampe, du doigt 8 (figure 7b).

Après rupture de la liaison entre l'extrémité 6 du ressort 5 et le doigt 8, le ressort 5 vient se plaquer contre la paroi interne du rotor 2 en augmentant ainsi la masse du rotor et, par conséquent, son moment cinétique. Le rotor atteint de ce fait rapidement sa vitesse maximale.

**Revendications**

1. Gyroscope, du type comprenant:
   – un rotor creux (2) susceptible de tourner autour d'un arbre fixe (3) le traversant,
   – un ressort à lame (5) logé à l'intérieur du rotor et entourant en spirale ledit arbre fixe,
   – des premiers et seconds moyens de liaison pour solidariser, respectivement, une première extrémité du ressort avec l'arbre fixe (3), et la seconde extrémité du ressort avec le rotor (2), de sorte qu'il soit possible d'emmagasiner de l'énergie dans le ressort (5) en le bandant,
   – des moyens (11) de blocage du rotor par rapport à l'arbre fixe dans une position pour laquelle le ressort est bandé:
   – des moyens de commande (13) des moyens de blocage pour débloquer le rotor de façon que celui-ci soit entraîné en rotation par la détente du ressort,
   – lesdits premiers moyens de liaison étant tels que la liaison qu'ils établissent est rompue à la fin de la détente du ressort, caractérisé en ce que:
   – lesdits premiers moyens de liaison comportent un doigt (8), porté par l'arbre fixe (3), qui s'étend transversalement par rapport à l'axe longitudinal (X–X') de l'arbre fixe (3) et qui est susceptible d'être engagé dans une ouverture (9) pratiquée dans ladite première extrémité (6) du ressort (5);
   – ledit doigt (8) est muni d'une gorge (20) pour l'accrochage du bord avant (21) de l'ouverture (9) pratiquée dans la première extrémité (6) du ressort (5); et
   – les dimensions transversale et longitudinale de l'ouverture (9) sont telles qu'elles permettent un mouvement relatif entre le doigt et l'ouverture, et le dégagement du doigt de l'ouverture à la fin de la détente du ressort.

2. Gyroscope selon la revendication 1, caractérisé en ce que ladite ouverture (9) présente une forme générale oblongue dans la direction longitudinale du ressort (5).

3. Gyroscope selon l'une quelconque des revendications 1 ou 2, caractérisé en ce que ladite première extrémité (6) du ressort (5) comporte une languette (27) fixée sur la partie (28) du bord de l'ouverture (9) opposée à celle destinée à être accrochée dans ladite gorge (20), languette (27) qui, en position bandée du ressort, est inclinée vers l'extérieur par rapport à l'arbre fixe (3), son extrémité libre se trouvant au contact ou au voisinage de la tête (22) dudit doigt (8).

4. Gyroscope selon la revendication 3, caractérisé en ce que la tête (22) dudit doigt (8) présente une rampe sur laquelle ladite languette (27) peut glisser à la fin de la détente du ressort.

5. Gyroscope selon l'une quelconque des revendications 1 à 4, caractérisé en ce que ledit doigt (8) est de forme générale cylindrique et en ce que ladite gorge (20) est annulaire.

6. Gyroscope selon la revendication 5, caractérisé en ce que la tête (22) du doigt (8) est de forme générale tronconique.

7. Gyroscope selon l'une quelconque des revendications précédentes, caractérisé en ce que l'arbre fixe (3) présente un évidement transversal (15) pour y loger en partie ledit doigt (8).

8. Gyroscope selon l'une quelconque des revendications précédentes, caractérisé en ce que le rayon de courbure de ladite première extrémité (6) du ressort (5), dans l'état non bandé du ressort, est supérieur au rayon de courbure de celle-ci une fois que le ressort a été accroché audit doigt et bandé.

9. Gyroscope selon l'une quelconque des revendications précédentes, caractérisé en ce que ladite seconde extrémité (7) du ressort (5) est recourbée sur elle-même de façon à s'accrocher à un ergot (29) prévu sur la paroi latérale interne du rotor (2).

**Patentansprüche**

1. Gyroskop mit:
   – einem zur Drehung um eine fest, ihn durchdringende Achse (3) geeigneten Hohlrotor (2);
   – einer im Innern des Rotors angebrachten und die feste Achse spiralförmig umgebenden Blattfeder (5);
   – ersten und zweiten Verbindungsmitteln zum festen Verbinden eines ersten Endes der Feder mit der festen Achse (3) und des zweiten Endes der Feder mit dem Rotor (2), so daß durch Spannen der Feder (5) in ihr Energie gespeichert werden kann,
– Mitteln (11) zum Blockieren des Rotors relativ zur festen Achse in einer Position, in der die Feder gespannt ist,
– Steuermitteln (13) für die Mittel zum Blockieren, um den Rotor derart freizugeben, daß dieser durch den Anschlag der Feder in Drehung versetzt wird,
– wobei die ersten Verbindungsmittel derart gestaltet sind, daß die von ihnen bewirkte Verbindung am Ende des Anschlages der Feder unterbrochen wird, dadurch gekennzeichnet, daß:
– die ersten Verbindungsmittel einen von der festen Achse (3) getragenen Finger (8) aufweisen, der sich quer zur Längsachse (X–X') der festen Achse (3) erstreckt und der in eine in dem ersten Ende (6) der Feder (5) angebrachte Öffnung (9) eingreifen kann;
– der Finger (8) mit einer Vertiefung (20) zum Mitnehmen der Vorderkante (21), der in dem ersten Ende (6) der Feder (5) angebrachten Öffnung (9) versehen ist, und daß
– die Quer- und Längsabmessungen der Öffnung (9) derart sind, daß sie eine relative Bewegung zwischen dem Finger und der Öffnung sowie die Auslösung des Fingers von der Öffnung am Ende des Anschlages der Feder erlauben.

2. Gyroskop nach Anspruch 1, dadurch gekennzeichnet, daß die Öffnung (9) eine im wesentlichen längliche Form in Längsrichtung der Feder (5) aufweist.

3. Gyroskop nach einem der Ansprüche 1 oder 2, dadurch gekennzeichnet, daß das erste Ende (6) der Feder (5) eine am Teil (28) der Kante der der zum Eingreifen in die Vertiefung (20) vorgesehenen Öffnung entgegengesetzten Öffnung (9) befestigte Zunge (27) umfaßt, die bei gespannter Feder nach außen relativ zur festen Achse (3) geneigt ist, wobei ihr freies Ende sich in Kontakt mit oder in der Nachbarschaft von dem Kopf (22) des Fingers (8) befindet.

4. Gyroskop nach Anspruch 3, dadurch gekennzeichnet, daß der Kopf (22) des Fingers (8) eine Schräge aufweist, auf der die Zunge (27) bis zum Ende des Anschlages der Feder gleiten kann.

5. Gyroskop nach einem der Ansprüche 1 bis 4, dadurch gekennzeichnet, daß der Finger (8) von im wesentlichen zylindrischer Gestalt ist und daß die Vertiefung (20) von ringförmiger Gestalt ist.

6. Gyroskop nach Anspruch 5, dadurch gekennzeichnet, daß der Kopf (22) des Fingers (8) von im wesentlichen kegelstumpfartiger Gestalt ist.

7. Gyroskop nach einem der vorhergehenden Ansprüche, dadurch gekennzeichnet, daß die feste Achse (3) eine Queraussparung (15) zum teilweisen Aufnehmen des Fingers (8) aufweist.

8. Gyroskop nach einem der vorhergehenden Ansprüche, dadurch gekennzeichnet, daß der Krümmungsradius des ersten Endes (6) der Feder (5) im ungespannten Zustand größer ist als dessen Krümmungsradius, wenn die Feder am Finger eingehakt und gespannt ist.

9. Gyroskop nach einem der vorhergehenden Ansprüche, dadurch gekennzeichnet, daß das zweite Ende (7) der Feder (5) in sich selbst derart gekrümmt ist, daß es an einem an der inneren Seitenwand des Rotors (2) vorgesehenen Vorsprung (29) einhaken kann.

## Claims

1. Gyroscope, of the type comprising:
– a hollow rotor (2) adapted to rotate about a fixed shaft (3) traversing it,
– a leaf spring (5) housed inside the rotor and spirally surrounding said fixed shaft,
– first and second connection means for respectively joining a first end of the spring to the fixed shaft (3) and the second end of the spring to the rotor (2), with the result that it is possible to store energy in the spring (5) by tensioning it,
– means (11) for blocking the rotor with respect to the fixed shaft in a position for which the spring is tensioned,
– means (13) for controlling the blocking means in order to unblock the rotor so that it is driven in rotation by the release of the spring,
– said first connection means being such that the connection that they establish is broken at the end of release of the spring, characterized in that:
– said first connection means comprise a finger (8), borne by the fixed shaft (3), which extends transversely with respect to the longitudinal axis (X–X') of the fixed shaft (3) and which is capable of being engaged in an opening (9) made in said first end (6) of the spring (5);
– said finger (8) is provided with a groove (20) for fastening the front edge (21) of the opening (9) made in the first end (6) of the spring (5); and
– the transverse and longitudinal dimensions of the opening (9) are such that they allow a relative movement between the finger and the opening, and the disengagement of the finger from the opening at the end of release of the spring.

2. Gyroscope according to claim 1, characterized in that said opening (9) is generally oblong in shape in the longitudinal direction of the spring (5).

3. Gyroscope according to any one of claims 1 or 2, characterized in that said first end (6) of the spring (5) comprises a tongue (27) fixed on that part (28) of the edge of the opening (9) opposite the one intended to be fastened in said groove (20), which tongue (27), with the spring in tensioned position, is inclined outwardly with respect to the fixed shaft (3), its free end lying in contact with or in the vicinity of the head (22) of said finger (8).

4. Gyroscope according to claim 3, characterized in that the head (22) of said finger (8) presents a ramp on which said tongue (27) may slide at the end of release of the spring.

5. Gyroscope according to any one of claims 1 to 4, characterized in that said finger (8) is generally cylindrical in form, and in that said groove (20) is annular.

6. Gyroscope according to claim 5, characterized in that the head (22) of the finger (8) is generally truncated in form.

7. Gyroscope according to any one of the preceding claims, characterized in that the fixed shaft (3) presents a transverse recess (15) for partly housing said finger (8) therein.

8. Gyroscope according to any one of the preceding claims, characterized in that the radius of curvature of said first end (6) of the spring (5), in the non-tensioned state of the spring (5), is greater than the radius of curvature thereof once the spring has been fastened to said finger and tensioned.

9. Gyroscope according to any one of the preceding claims, characterized in that said second end (7) of the spring (5) is curved on itself so as to be fastened to a catch (29) provided on the inner lateral wall of the rotor (2).

EP 0 235 475 B1

*Fig.1*

*Fig.2*

Fig. 3

Fig. 4

Fig. 5

Fig. 6

Fig. 7a

Fig. 7b